(19) **Europäisches Patentamt European Patent Office Office européen des brevets**

(11) **EP 1 184 651 B1**

(12) **EUROPÄISCHE PATENTSCHRIFT**

(45) Veröffentlichungstag und Bekanntmachung des Hinweises auf die Patenterteilung:
**15.08.2007  Patentblatt 2007/33**

(51) Int Cl.:
*G01L 23/22* (2006.01)      *F02P 5/152* (2006.01)

(21) Anmeldenummer: **01119111.1**

(22) Anmeldetag: **08.08.2001**

(54) **Verfahren zur Klopferkennung bei Brennkraftmaschinen**

Method for detecting knock in an internal combustion engine

Procédé de détection de cliquetis dans un moteur à combustion interne

(84) Benannte Vertragsstaaten:
**DE FR GB IT**

(30) Priorität: **01.09.2000  DE 10043498**

(43) Veröffentlichungstag der Anmeldung:
**06.03.2002  Patentblatt 2002/10**

(73) Patentinhaber: **ROBERT BOSCH GMBH**
**70442 Stuttgart (DE)**

(72) Erfinder:
• **Sauler, Juergen**
**70192 Stuttgart (DE)**
• **Torno, Oskar**
**71701 Schwieberdingen (DE)**
• **Heinstein, Axel**
**71299 Wimsheim (DE)**
• **Kluth, Carsten**
**70469 Stuttgart (DE)**
• **Haeming, Werner**
**74861 Neudenau (DE)**

(56) Entgegenhaltungen:
**WO-A-95/10032          WO-A-99/10652**
**DE-A- 4 332 711         DE-A- 19 506 272**
**DE-A1- 3 020 853**

**Beschreibung**

Die Erfindung betrifft ein Verfahren zur Klopferkennung bei Brennkraftmaschinen nach der Gattung des Hauptanspruchs.

Stand der Technik

Es ist bekannt, dass beim Betrieb von Brennkraftmaschinen Verbrennungen in den Zylindern auftreten können, die zum Klopfen führen. Solche Verbrennungen die zur Zerstörung der Brennkraftmaschinen führen können, müssen zuverlässig erkannt werden, damit schnell Maßnamen eingeleitet werden können, die weitere klopfenden Verbrennungen verhindern. Üblicherweise werden zur Klopferkennung Sensoren eingesetzt, die den Zylindern der Brennkraftmaschine zugeordnet sind und ein Signal liefern, das vom Grundgeräusch der Brennkraftmaschine sowie von den gegebenenfalls auftretenden Klopfgeräuschen abhängt.

Die Ausgangssignale der Klopfsensoren werden üblicherweise im Steuergerät der Brennkraftmaschinen ausgewertet, das auch die Zündung und/oder Einspritzung abhängig von der Klopferkennung regelt. Das besondere Problem bei der Klopferkennung besteht darin, dass das Klopfgeräusch von verschiedenen anderen Geräuschen, insbesondere vom Grundgeräusch der Brennkraftmaschine überlagert wird. Es ist daher ,beispielsweise aus der DE 195 06 272 A1, bekannt, besondere Auswerteverfahren zur Klopferkennung durchzuführen. Die Basis für die üblichen Klopferkennungen ist die Bildung eines Referenzpegel der das Grundgeräusch der Brennkraftmaschine im nichtklopfenden Betrieb beschreibt. Dieser Referenzpegel wird vom Steuergerät aus den Ausgangssignalen der Klopfsensoren zylinderindividuell ermittelt. Diese Ermittlung kann zylinderspezifisch erfolgen oder als Mittelung. Dabei wird der Referenzpegel laufend neu berechnet, damit er stets die aktuellen Verhältnisse der Brennkraftmaschine wiedergibt. Eine Formel zur Berechnung des Referenzpegels im klopffreien Betrieb ist beispielsweise gegeben durch:

$$\mathrm{rkr(neu)=rkr(alt)+(KRFTP-1)/KRFTP+ikr/KRFTP}$$

Im einzelnen bedeuteten diese Abkürzungen:

$$\mathrm{rkr(neu)= neuer\ Referenzpegel}$$

$$\mathrm{rkr\ (alt)= alter\ Referenzpegel}$$

KRFTP= Faktor für die Nachführung des Referenzpegels, ein typischer Wert für KRFTP im klopffreien Betrieb ist 16

ikr= Integrator Wert der aktuellen Verbrennung, üblicherweise wird das aufbereitete Klopfsignal in einem vorgebbaren Bereich integriert

Bei schnelleren Geräuschänderungen, bspw. aufgrund von schnellen Last- oder Drehzahländerungen wird der Nachführfaktor KRFTP kleiner als 16, bei Last- oder Drehzahländerungen ist die Geräuschänderungen bei allen Zylindern ähnlich. Die Referenzpegelnachführung erfolgt auch im klopfendem Betrieb über die oben genannte Formel. Wenn keine klopfenden Verbrennungen aufgetreten sind, wird der aktuelle Integratorwert wie beschrieben eingerechnet. Bei klopfender Verbrennung wird der aktuelle Integratorwert nicht voll eingerechnet, sondern vor der Einrechnung korrigiert. Zur tatsächlichen Klopferkennung wird das Verhältnis aktueller Integratorwerte ikr zum Referenzpegel rkr gebildet. Wenn dieses Verhältnis einen vorgebbaren Schwellenwert überschreitet, wird auf Klopfen erkannt. Eine Einrichtung zur Klopferkennung mit der eine derartige Vorgehensweise durchgeführt wird, ist beispielsweise aus der DE-OS- 43 339 65 bzw. der zur selben Patentfamilien gehörenden US-PS 5 743 233 bekannt.

Aufgabe der Erfindung

Der Referenzpegel, der aus den Ausgangssignalen der Klopfsensoren gebildet wird, wird durch verschiedene Faktoren beeinflußt, beispielsweise durch nicht erkannte klopfende Verbrennungen und durch Fehlerkennungen. Diese können z.B. durch Störgeräusche in der Brennkraftmaschine bzw. im Motor verursacht werden. Durch die Störgeräusche kann der Referenzpegel so stark ansteigen, dass eine Klopferkennung nicht mehr möglich ist. Dies ist insbesondere dann der Fall, wenn das Störgeräusch zu einem langsamen Anstieg des Referenzpegels führt. In diesem Fall kann es zu einem Dauerklopfen kommen, wodurch die Brennkraftmaschine bzw. der Motor zerstört wird. Störgeräusche können sowohl mechanische Störungen, beispielsweise das Ventilschließen als auch elektrische Einkopplungen sein. Diese Störgeräusche sind teilweise sporadisch und treten nur an einigen Zylindern auf. In diesem Fall werden nur die Referenzpegel der betroffenen Zylinder gestört, während die Referenzpegel und damit die Klopferkennung der anderen Zylinder nicht beeinflußt werden. Die Aufgabe der Erfindung besteht nun darin, solche Störungen in ihrer Auswirkung zu beschränken bzw. Auswirkungen durch solche Störungen zu verhindern. Gelöst wird diese Aufgabe durch das erfindungsgemäße Verfahren mit den Merkmalen des Anspruchs 1.

Vorteile der Erfindung

Die Vorteile der Erfindung sind darin zu sehen, dass eine zuverlässige Klopferkennung auch dann noch durchgeführt werden kann, wenn bei wenigstens einem der Zylinder nicht erkannte klopfende Verbrennungen auftreten oder Fehlerkennungen von Klopfen erfolgen oder wenn Störgeräusche derart laut sind, dass sie zu einer Beeinträchtigung der Klopferkennung führen könnten. Bei all diesen Fehlern wird in vorteilhafter Weise verhindert, dass der Referenzpegel eines gestörten Zylinders zu stark ansteigt und damit eine Klopferkennung unmöglich machen würde. Durch das erfindungsgemäße Verfahren mit den Merkmalen des Anspruchs 1 wird in vorteilhafter Weise erreicht, dass der Referenzpegel eines gestörten Zylinders nicht unerlaubt ansteigen kann und somit eine zuverlässige Klopferkennung weiterhin möglich ist. Dieser Vorteil wird besonders wirksam, wenn das Störgeräusch nur bei einen oder nur wenigen vorhandenen Zylindern bzw. den zugeordneten Sensoren auftritt.

Erzielt wird dieser Vorteil, indem der Anstieg des Referenzpegels, der sich in Abhängigkeit vom Geräusch der Brennkraftmaschine verändert, in vorgebbarer Weise begrenzt wird, insbesonders unter Berücksichtigung eines Gradienten, der ein Maß für die Änderung der Referenzpegel ist. Die Festlegung des Referenzpegelbandes und/oder die Bestimmung eines Schwellwertes für einen noch zu tolerierenden Gradienten erfolgt in vorteilhafte Weise abhängig von Geräuschen aller Zylinder oder abhängig von wählbaren Zylindern. Dabei sind Mittelwertbildungen zur Festlegung von Grenzwerten oder Schwellwerten von besonderem Vorteil.

Die weiteren Vorteile der Erfindung werden durch die in den Unteransprüchen angegebenen Maßnahmen erzielt.

Zeichnung

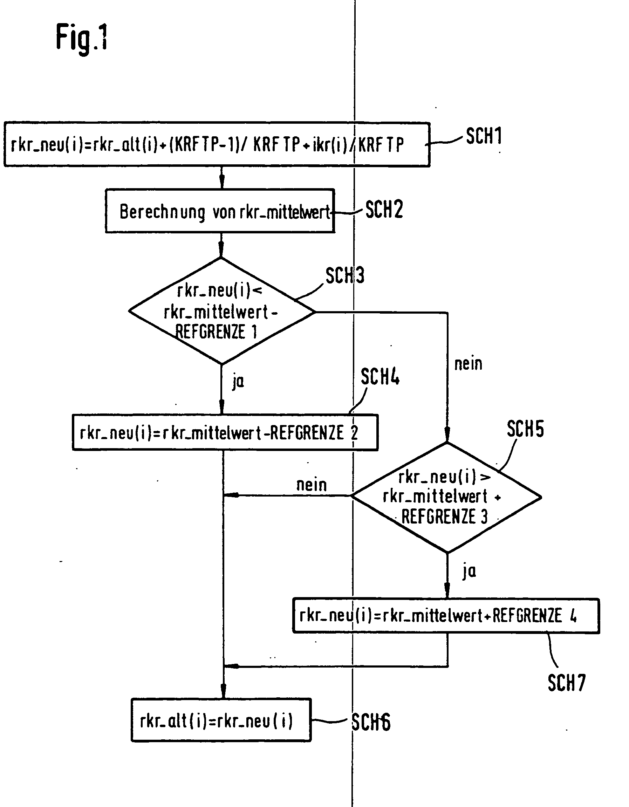

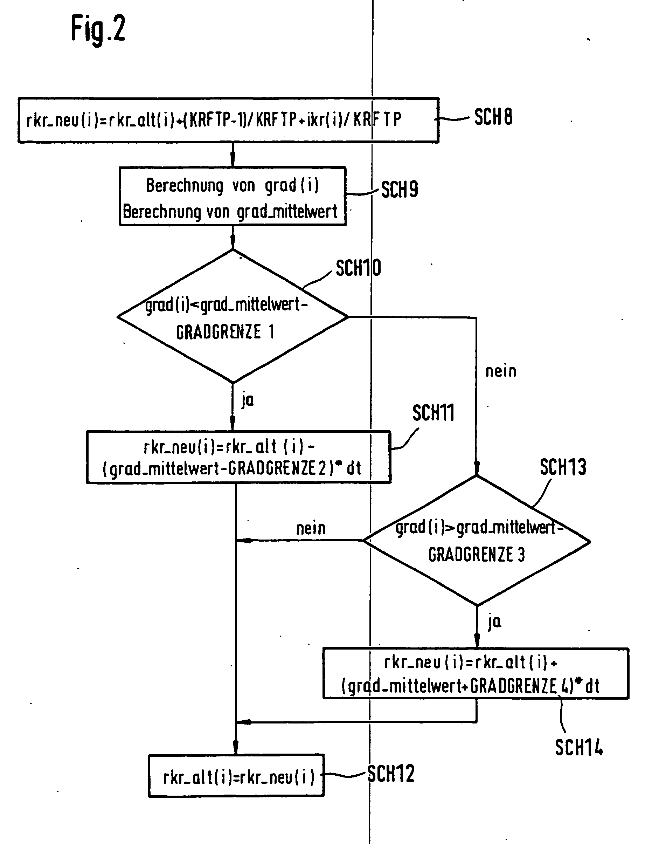

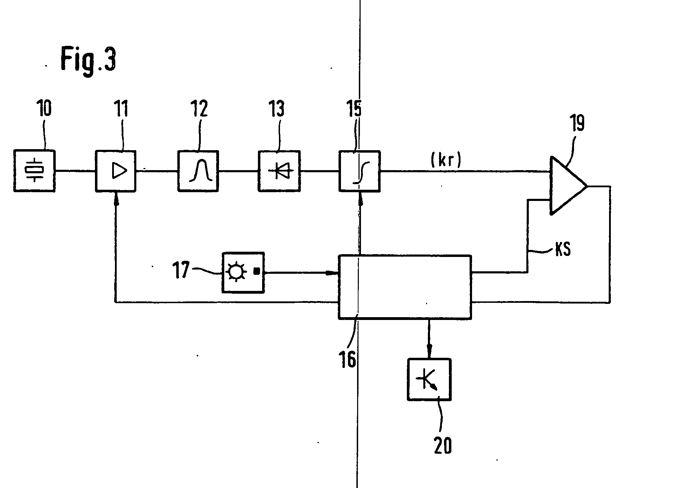

Ausführungsbeispiele sind in den Figuren 1 und 2 dargestellt und werden in der nachfolgenden Beschreibung näher erläutert. Fig. 1 zeigt kein erfindungsgemäßes Verfahren. In Figur 3 ist ein Schaltungsbeispiel zur Klopferkennung bzw. zur Klopfregelung dargestellt, da es bereits aus der DE-OS 43 339 65 bzw. der US-PS 5 743 233 bekannt ist. Mit diesem Schaltungsbeispiel können die Verfahren nach den Figuren 1 und 2 durchgeführt werden.

Beschreibung

Mit den im folgenden dargestellten Beispielen kann der Anstieg des Referenzpegels rkr zylinderindividuell begrenzt werden. Als Grenze für den Anstieg werden die Referenzpegel rkr(i) bzw. die Gradienten der anderen Zylinder benutzt. Durch diese Maßnahmen wird erreicht, dass der Referenzpegel eines gestörten Zylinders nicht zu stark ansteigen kann und eine Klopferkennung weiterhin möglich ist. Dies ist besonders Wirksam, wenn das Störgeräusch nur bei wenigen vorhandenen Zylindern auftritt.

Die Nachführung des Referenzpegels rkr(neu) (i) wird wie bisher zylinderindividuell berechnet. Im Beispiel nach Figur 1 entspricht die Nachführung des Referenzpegels dem Schritt SCH1. Dabei wird berechnet:

$$\texttt{rkr(neu)(i)=rkr(alt)(i)} \cdot \texttt{[(KRFTP-1)/KRFTP]} + \texttt{ikr(i)/KRFTP}$$

Die Bezeichnungen entsprechen den bereits bei der Würdigung des Standes der Technik angegebenen Bezeichnungen; i steht für die Zylindernummer. Anschließend wird der ermittelte Wert überprüft. Dabei wird beispielsweise überprüft, ob der Referenzpegel ein vorgegebenes Band verläßt. Beim Ausführungsbeispiel nach Figur 2 wird überprüft ob der Gradient grad(i) der Geräuschzunahme bei dem Zylinder höher als ein vorgegebener Wert ist. Jeweils bei Erfüllung dieser Bedingungen wird der Referenzpegel begrenzt

Beim Beispiel nach Figur 1 wird der Bandbereich beispielsweise aus dem Mittelwert der Referenzpegel aller Zylinder bestimmt, wobei zusätzlich eine applizierbare Schwelle REFGRENZE bestehen bleibt. In Figur 1 ist die Berechnung des Mittelwertes der Referenzwerte im Schritt SCH2 dargestellt, im Schritt SCH3 wird der neue Referenzwert rkr(neu(i)) dahingehend geprüft, ob er kleiner ist als der Mittelwert der Referenzwert rkrmittelwert minus dem Bandbereich REFGRENZE1 ist. Ergibt diese Überprüfung im Schritt SCH3, dass die Bedingung für den neuen Referenzwert erfüllt ist, wird im Schritt SCH4 als neuer Referenzwert rkr(neu) (i) der Wert rkrmittelwert minus dem Bandbereich REFGRENZE2 2 genommen. Ergibt dagegen der Schritt SCH3, dass der Mittelwert größer ist als der Mittelwert minus dem Bandbereich REFGRENZE1, wird im Schritt SCH5 abgefragt, ob der neue Referenzwert rkr(neu) (i) größer ist als der Wert rkrmittelwert plus REFGRENZE3. Ergibt dieser Vergleich, dass die Bedingung nicht erfüllt ist, wird der alte Referenzpegelwert rkr (alt) (i) ersetzt durch den neuen Referenzpegel rkr(neu) (Schritt SCH6).

Ergibt dagegen der Vergleich im Schritt SCH5, dass der neue Referenzpegel größer ist als der Mittelwert der Referenzpegel zusätzlich einer dem Wert REFGRENZE3, wird im Schritt SCH7 der neue Referenzpegelwert rkr(neu(i)) ersetzt durch den Mittelwert der Referenzpegel rkrmittelwert plus dem Wert REFGRENZE4.

In Figur 2 ist ein Ausführungsbeispiel der Erfindung dargestellt, bei dem im ersten Schritt SCH8 der dem Schritt SCH1 des Beispiels nach Figur 1 entspricht, der neue Referenzpegel rkr(neu(i)) gebildet wird aus dem alten Referenzpegel rkr(alt(i)) multipliziert mit dem Verhältnis der beiden Faktoren (KRFTP-1)/KRFTP zuzüglich dem Verhältnis ikr(i)/KRFTP. Im Schritt SCH9 wird jeweils der Gradient aus den Referenzpegeln rkr(i) berechnet, wobei diese Berechnung sowohl die Berechnung des Gradienten grad(i) umfassen kann als auch die Berechnung eines Mittelwertes gradmittelwert der Gradienten grad (i).

Im Schritt SCH10 wird der Gradient grad(i) daraufhin geprüft, ob er kleiner ist als der Gradient des Mittelwertes gradmittelwert abzüglich eines Gradientengrenzwertes GRADGRENZE1. Ist diese Bedingung nach Schritt SCH10 erfüllt, wird im Schritt SCH11 der neue Referenzwert rkr(neu)(i) ersetzt durch den alten Referenzwert rkr(alt)(i) abzüglich einer Differenz aus dem Mittelwert des Gradienten gradmittelwert und einer weiteren Grenzwertbedingung GRADGRENZE2 multipliziert mit der Zeit dt. Der so erhaltene Wert wird im Schritt SCH12 als neuer Referenzwert genommen, wobei also die Bedingung rkr(alt) (i)=rkr(neu) (i) gilt.

Ergibt der Vergleich nach Schritt SCH10, dass der Gradient grad (i) nicht kleiner ist als der Gradient des Mittelwertes gradmittelwert abzüglich eines Grenzwertes für den Gradienten GRADGRENZE1, wird im Schritt SCH13 überprüft ob der Gradient grad(i) größer ist als der Gradient des Mittelwertes gradmittelwert minus des Grenzwertes für den Gradienten GRADGRENZE3. Wenn diese Bedingung erfüllt wird, wird im Schritt SCH14 für den neuen Referenzwert rkr(neu(i)) der alte Referenzwert rkr(alt(i))genommen, korrigiert mit der Summe des Gradienten des Mittelwertes gradmittelwert und des Grenzwertes GRADGRENZE4 multipliziert mit der Zeit dt. Damit wird im Schritt SCH12 dann wieder die Begrenzung des Referenzpegels über den Gradienten erhalten.

Anstatt alle Zylinder zur Bewertung heranzuziehen, kann auch eine Bildung von Gruppen erfolgen. Basis für diese Gruppenbildung kann beispielsweise eine Einteilung nach lauten oder leisen Zylindern sowie die Zuordnung zu einem Klopfsensor sein. Die in den Figuren 1 und 2 dargestellten Abläufe sind für alle Zylinder ohne zusätzliche Gruppenbildung gemacht. Die Abläufe sind jedoch für die Einteilung in Gruppen äquivalent.

Die Berechnung der neuen Referenzpegel in den Schritten SCH11 und SCH 14 kann alternativ auch auf Basis der Mittelwerte der Referenzpegel rkrmittelwert erfolgen. In beiden Schritten wird der Referenzpegel rkr(alt) (i) durch den Referenzpegelmittelwert rkrmittelwert ersetzt. Damit ergibt sich für den Schritt 11, d. h. wenn der Gradient grad (i) kleiner als der Schwellwert ist, die Beziehung:

```
Rkr(neu)(i) = rkrmittelwert-(gradmittelwert-GRADGRENZE2) *
dt + REFGRENZE2
```

Wenn in Schritt 10 der Gradient grad grösser als der Schwellwert ist, wird der Referenzpegel in Schritt 14 nach der folgenden Beziehung berechnet:

```
rkr(neu)(i) = rkrmittelwert + (gradmittelwert+GRADGRENZE4) *
dt + RERGRENZE4
```

Dabei bedeuten:

rkrmittelwert: Mittelwert der Referenzpegel aller Zylinder, gradmittelwert: Mittelwert der Gradienten aller Zylinder dt: Zeit für die Gradientenberechnung.

In Figur 3 ist eine Ausführungsform für eine Einrichtung zur Klopferkennung bzw. Klopfregelung bei einer Brennkraftmaschine dargestellt, mit der die erfindungsgemäßen Verfahren durchgeführt werden können. Dabei ist im einzelnen mit 10 ein Klopfsensor bezeichnet, der die Geräusche eines nicht dargestellten Motors bzw. einer nicht dargestellten Brennkraftmaschine erfaßt. Die erfaßten Geräusche werden über einen regelbaren Verstärker 11 und einen Brandpaß 12 einer als Gleichrichter ausgebildeten Demodulationsschaltung 13 zugeführt. Der Gleichrichter ist mit einem Integrator 15 verbunden. Durch die Regelung der Verstärkung wird erreicht, dass der Referenzpegel des Ausgangssignales des Regelverstärkers weitergehend konstant und unabhängig von der Motordrehzahl ist. Der Integrator 15 bildet während eines kurbelwellensynchronen Meßfensters, welches von einem Steuergerät 16 in Abhängigkeit vom Ausgangssignal eines Drehzahlgebers 17 gebildet wird, das Meßsignal ikr. Das Meßintegral ikr wird in einen Komparator 19 mit der vom Steuergerät vorgebenden Klopfschwelle ks verglichen, dessen Ausgangssignal das Klopferkennungssignal ist, das ans Steuergerät 16 zur Klopfregelung weitergeführt wird. Vom Steuergerät 16 werden abhängig vom Ausgangssignal des Komparators 19, d.h. abhängig davon, ob Klopfen erkannt wurde oder nicht die Ausgangssignale für die Endstufen 20 gebildet, zur Auslösung der Zündung in dem betreffenden Zylinder.

Die zusätzlichen Schritte nach den in den Figuren 1 und 2 beschriebenen Verfahren laufen üblicherweise im Steuergerät 16 der Brennkraftmaschine bzw. des Motors ab, das über geeignete Prozessor- und Speichermittel verfügt.

## Patentansprüche

1.  Verfahren zur Klopferkennung bei einer Brennkraftmaschine, wobei Klopfen erkannt wird, wenn das erfaßte und gegebenenfalls aufbereitete Klopfsignal einen Referenzpegel, welcher sich in Abhängigkeit vom Geräusch der Brennkraftmaschine verändert, überschreitet, wobei der Referenzpegel aus dem aufbereiteten Klopfsignal zylindrindividuell gebildet wird **dadurch gekennzeichnet, dass** der Anstieg des Referenzpegels in vorgebbarer weise, begrenzt wird unter Berücksichtigung eines Gradienten, der ein Maß für die Änderung des Referenzpegels ist wobei eine Schwelle für den Gradienten aus dem Mittelwert des Gradienten einiger oder aller Zylinder plus einer applizierbaren weiteren Schwelle gebildet wird.

2.  Verfahren nach Anspruch 1, **dadurch gekennzeichnet, dass** der Anstieg des Referenzpegels zylinderindividuell begrenzt wird unter Berücksichtigung der Geräusche einiger anderer Zylinder bzw. der Geräusche aller Zylinder.

3.  Verfahren nach Anspruch 1 oder 2, **dadurch gekennzeichnet, dass** der Anstieg des Referenzpegels begrenzt wird wenn ein zylinderindividuell ermittelter neuer Referenzpegel ausserhalb eines Referenzpegelbandes, das abhängig von den Geräuschen einiger oder aller Zylinder gebildet wird, liegt.

4.  Verfahren nach Anspruch 1 oder 2, **dadurch gekennzeichnet, dass** der Anstieg des Referenzpegels begrenzt wird, wenn ein zylinderindividuell ermittelter neuer Referenzpegel größer ist, als ein Wert, der abhängig von den Geräuschen einiger oder aller Zylinder gebildet wird.

5.  Verfahren nach einem der vorhergehenden Ansprüche, **dadurch gekennzeichnet, dass** der Anstieg des Referenzpegels begrenzt wird, wenn der Gradient der Geräuschzunahme grö-βer ist, als ein vorgebbarer Wert.

6.  Verfahren nach einem der vorhergehenden Ansprüche, **dadurch gekennzeichnet, dass** ein Bandbereich für die Begrenzung des Referenzpegelanstiegs aus dem Mittelwert der Referenzpegel einiger oder aller Zylinder plus einer applizierbaren Schwelle bestimmt wird.

7.  Verfahren nach einem der vorhergehenden Ansprüche, **dadurch gekennzeichnet, dass** bei der Ermittlung der Schwellwerte nicht alle Zylinder berücksichtigt werden, sondern nur solche, die ein vorgebbares Auswahlkriterium, insbesonders hinsichtlich der Lautstärke erfüllen.

8.  Verfahren nach Anspruch 7, **dadurch gekennzeichnet, dass** eine Gruppeneinteilung derart erfolgt, dass die lautesten oder die leisesten Zylinder jeweils einer Gruppe zugeordnet werden.

## Claims

1.  Method for knock detection in an internal combustion engine, with knocking being detected if the measured and, if appropriate, processed knock signal exceeds a reference level which varies as a function of noise of the internal combustion engine, with the reference level being formed in a cylinder-specific manner from the processed knock signal, **characterized in that** the rise of the reference level is limited in a predefineable manner incorporating a gradient which is a measure for the change of the reference level, with a threshold for the gradient being formed from the mean value of the gradient of some or all of the cylinders plus an applicable further threshold.

2. Method according to claim 1, **characterized in that** the rise of the reference level is limited in a cylinder-specific manner incorporating the noises of some other cylinders or the noises of all of the cylinders.

3. Method according to Claim 1 or 2, **characterized in that** the rise of the reference level is limited if a new reference level, which is determined in a cylinder-specific manner, lies outside a reference level band which is formed as a function of the noises of some or all of the cylinders.

4. Method according to Claim 1 or 2, **characterized in that** the rise of the reference level is limited if a new reference level, which is determined in a cylinder-specific manner, is greater than a value which is formed as a function of the noises of some or all of the cylinders.

5. Method according to one of the preceding claims, **characterized in that** the rise of the reference level is limited if the gradient of the noise increase is greater than a predefinable value.

6. Method according to one of the preceding claims, **characterized in that** a band range for the limitation of the reference level rise is determined from the mean value of the reference level of some or all of the cylinders plus an applicable threshold.

7. Method according to one of the preceding claims, **characterized in that** not all of the cylinders are incorporated in the determination of the threshold values, but only those which fulfil a predefineable selection criterion, in particular with regard to loudness.

8. Method according to Claim 7, **characterized in that** a group division takes place in such a manner that the loudest or the quietest cylinders are assigned to in each case one group.

## Revendications

1. Procédé de détection de cliquetis dans un moteur à combustion interne, reconnaissant le cliquetis lorsque le signal de cliquetis enregistré et traité le cas échéant dépasse un niveau de référence variable en fonction des bruits du moteur à combustion interne, en formant un niveau de référence distinct pour chaque cylindre à partir du signal de cliquetis traité,
   **caractérisé en ce que**
   l'augmentation du niveau de référence est limitée de manière donnée en tenant compte d'un gradient qu mesure la variation du niveau de référence, en formant un seuil pour le gradient à partir de la valeur moyenne du gradient d'un ou de plusieurs cylindres ajouté à un autre seuil applicable.

2. Procédé selon la revendication 1,
   **caractérisé en ce que**
   l'augmentation du niveau de référence est limitée individuellement par cylindre, en tenant compte des bruits de certains autres cylindres et/ou du bruit de tous les cylindres.

3. Procédé selon la revendication 1 ou 2,
   **caractérisé en ce que**
   l'augmentation du niveau de référence est limitée lorsqu'un nouveau niveau de référence calculé individuellement pour un cylindre se trouve en dehors d'une bande de référence formée en fonction des bruits de certains cylindres ou de tous les cylindres.

4. Procédé selon la revendication 1 ou 2,
   **caractérisé en ce que**
   l'augmentation du niveau de référence est limitée lorsqu'un nouveau niveau de référence calculé individuellement pour un cylindre est supérieur à une valeur formée en fonction des bruits de certains cylindres ou de tous les cylindres.

5. Procédé selon l'une quelconque des revendications précédentes,

**caractérisé en ce que**

l'augmentation du niveau de référence est limitée lorsque le gradient de l'augmentation du bruit est supérieur à une valeur donnée.

6. Procédé selon l'une quelconque des revendications précédentes,
**caractérisé en ce que**
pour limiter l'augmentation du niveau de référence on détermine une plage à partir de la valeur moyenne du niveau de référence de certains ou de tous les cylindres, plus un seuil applicable.

7. Procédé selon l'une quelconque des revendications précédentes,
**caractérisé en ce que**
lors du calcul des valeurs de seuil, on ne tient pas compte de tous les cylindres, mais seulement de ceux remplissant un critère de sélection prédéterminé, notamment l'intensité sonore.

8. Procédé selon la revendication 7,
**caractérisé en ce qu'**
une répartition par groupe associes cylindres les plus bruyants ou les plus silencieux, respectivement à un groupe.

## Fig.1

rkr_neu(i)=rkr_alt(i)+(KRFTP-1)/ KRFTP+ikr(i)/KRFTP — SCH1

Berechnung von rkr_mittelwert — SCH2

SCH3

rkr_neu(i)<
rkr_mittelwert-
REFGRENZE 1

nein

ja

SCH4

rkr_neu(i)=rkr_mittelwert-REFGRENZE 2

SCH5

nein

rkr_neu(i)>
rkr_mittelwert +
REFGRENZE 3

ja

rkr_neu(i)=rkr_mittelwert+REFGRENZE 4

SCH7

rkr_alt(i)=rkr_neu(i) — SCH6

# Fig.2

$$\boxed{\text{rkr\_neu(i)=rkr\_alt(i)+(KRFTP-1)/KRFTP+ikr(i)/KRFTP}} \quad \text{SCH8}$$

$$\boxed{\begin{array}{c} \text{Berechnung von grad(i)} \\ \text{Berechnung von grad\_mittelwert} \end{array}} \quad \text{SCH9}$$

SCH10

$$\left\langle \begin{array}{c} \text{grad(i)<grad\_mittelwert-} \\ \text{GRADGRENZE 1} \end{array} \right\rangle$$

nein

ja

SCH11

$$\boxed{\begin{array}{c} \text{rkr\_neu(i)=rkr\_alt(i)-} \\ \text{(grad\_mittelwert-GRADGRENZE2)}^* \text{dt} \end{array}}$$

SCH13

nein

$$\left\langle \begin{array}{c} \text{grad(i)>grad\_mittelwert-} \\ \text{GRADGRENZE 3} \end{array} \right\rangle$$

ja

$$\boxed{\begin{array}{c} \text{rkr\_neu(i)=rkr\_alt(i)+} \\ \text{(grad\_mittelwert+GRADGRENZE 4)}^* \text{dt} \end{array}}$$

SCH14

$$\boxed{\text{rkr\_alt(i)=rkr\_neu(i)}} \quad \text{SCH12}$$

# Fig.3

(kr)

KS

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19506272 A1
- DE 4333965 A
- US 5743233 A